# EUROPEAN PATENT SPECIFICATION

(11) **EP 2 478 764 B1**
(45) Date of publication and mention of the grant of the patent: **21.05.2014**
(21) Application number: 11000497.5
(22) Date of filing: 21.01.2011
(51) Int. Cl.: A01K 47/06, A01K 53/00

(54) **Langstroth modification**
Langstroth-Modifizierung
Modification de Langstroth

(43) Date of publication of application: 25.07.2012
(73) Proprietor: King Saud University, Riyadh 11451 (SA)
(72) Inventor: Al-Khazim Al-Ghamdi, Ahmad, Prof., Riyadh 11451 (SA); Abou-Shaara, Hossam Farag Ibrahim, Riyadh 11451 (SA)
(74) Representative: Goddar, Heinz J.

(56) References cited:
- EP-A2- 0 014 170
- FR-A1- 2 839 613
- US-A- 3 978 534
- US-A- 5 799 614

## Description

The present invention relates to a beehive and, in particular, to a beehive with means to control the microclimate inside the beehive.

A feeding device for bees is known from document FR 2 839 613 A1. The device comprises a container to be filled with syrup. The container comprises a covered partition that acts as a reservoir and a further partition connected therewith that is uncovered and may be accessed by the bees. The feeding device is positioned outside of a beehive.

A significant problem faced by beekeepers in dry areas like, for example, in parts of Saudi Arabia, is the death of bees due to dry air and a lack of humidity inside the beehives.

It therefore remains a continuous need to provide a beehive which may be used in such areas.

This problem is solved by a beehive according to claim 1.

In more detail, a beehive is provided with a body which has means for receiving a drawer. The means for receiving the drawer comprises an aperture in a first side wall of the body. Moreover, a drawer is fitted in the body using the means for receiving the drawer. The drawer comprises a container for a liquid.

Here, humidity is increased inside the beehive by introducing a liquid into the beehive. Over the time, the liquid evaporates and the humidity in the bee hive is increased. The liquid is introduced via the container being comprised in the drawer. By retracting the drawer from the hive body and subsequently pushing the drawer into the body, the container can easily be refilled and positioned back in the beehive.

During operation, the beekeeper may fill the container with a liquid like water or a light aqueous solution of sugar and/or salt and push the drawer into the body. Due to evaporation of the liquid, vapor fills the hive body and the humidity is increased. This process is largely influenced by the temperature in the hive. The bee keeper may check the container from time to time and refill the liquid.

In a preferred embodiment, the drawer further has a bottom board. The bottom board advantageously increases the stability of the drawer. Moreover, the bottom board facilitates distribution of the mass forces of the liquid in the container. In particular, the container may be placed on top of the bottom board. Additionally, the container may be fastened to the bottom board.

In a preferred embodiment, the drawer further has a front board, a back board opposite the front board and two side walls.

In this embodiment, the drawer protects the container mechanically. Moreover, a high stability of the drawer is achieved. In some embodiments, the side walls may connect the front board with the back board.

In an even more preferred embodiment, the side walls, the bottom board, the front board and the back wall of the drawer further define the container for a liquid and are comprised of a water-proof material.

In this embodiment, no additional container is needed for containing the liquid. Rather, the drawer serves as container for the liquid. In this way, less elements are needed for the beehive, facilitating its production. In some embodiments, the parts of the drawer are formed of a water-proof material that have a surface defining the container.

In this embodiment, the water-proof material may, in particular, comprise plastics or waxed wood.

Plastics provides the advantages of being a durable and easy-to-clean material. Moreover, in this embodiment, the drawer may be easily manufactured in an industrial setting by standard techniques for producing plastic parts like casting. Compared to metals, which would be otherwise used, plastics provides the benefit of not being corrodible. However, the water-proof material may also comprise a metal like, e.g., aluminum or steel. In particular, the steel may, moreover, be coated, e.g., by zinc or may comprise stainless steel. If the water-proof material comprises a metal, the metal may be in the form of a metal sheet. Metal sheets are usually easy to process by folding, soldering, etc.

Using waxed wood as the water-proof material provides the benefit of using a natural material. Moreover, wood and bee wax are usually present where beehives are used. Hence, the beehive may be produced locally, thereby avoiding the burden to transport the beehive over long distances. In addition, a worn-out drawer may be renovated, e.g., by re-waxing. While waxed wood is preferred, the drawer may also comprise un-waxed wood. Un-waxed wood may, in particular, used for components of the drawer other than the container. In some embodiments, the front board, bottom board, back board, and side walls may comprise wood, in particular, waxed wood. Using wood is advantageous as it is usually cheap and easy to process.

Alternatively or additionally, the side walls, the bottom board, the front board and the back wall of the drawer are formed integrally. This prevents the drawer from falling apart due to inadequate assembly or due to wear out. Moreover, this provides a watertight connection between the side walls, the bottom board, the front board and the back wall. This is, in particular, advantageous for embodiments in which the side walls, the bottom board, the front board and the back wall of the drawer themselves define the container.

However, the side walls, the bottom board, the front board and the back wall of the drawer may in some embodiments also comprise separate components. These may be assembled by, e.g., nails, screws and/or glue.

According to a preferred embodiment, the drawer further comprises a handle.

The handle facilitates retracting the drawer from the body. The handle may, in particular, be arranged at the front board or at the bottom board of the drawer. The handle may further be formed integrally with the front board, the bottom board and/or the container of the drawer or may alternatively be formed as a separate component.

In a preferred embodiment, the means for receiving the drawer further comprises two side rails inside the body on a left and on an right side of the aperture, respectively. Moreover, the drawer further has coupling means on a left side and on a right side of the drawer respectively, for sliding engagement with the side rails.

In this embodiment, the drawer can easily be moved in and out. Moreover, rails and coupling means may be easily manufactured. In addition, in this embodiment, the drawer may be positioned at a desired height inside the beehive. In particular, the coupling means may be arranged at a bottom board, at a side wall or at the container of the drawer. The coupling means may, moreover, be formed integrally with a bottom board, a side wall or the container of the drawer or as a separate component. The coupling means may, e.g., comprise a rail or one or more wheels.

In a preferred embodiment, the body further has a horizontal board inside the body and the aperture is located above the horizontal board.

This yields a higher stability as the mass forces of the drawer and the contained liquid are diverted to the horizontal board. Moreover, liquid which is spilt out of the drawer does not drop all the way through the beehive but only a small distance to the horizontal board. This way, disturbance of the bees inside the beehive is avoided. In particular, the aperture may be located adjacent to the horizontal board.

According to an even more preferred embodiment, the horizontal board is attached at the bottom of the body.

Providing the drawer above a bottom board further helps to distribute the mass forces of the drawer and of the liquid in the container to the bottom of the beehive and from there to the ground. Moreover, in this embodiment, the horizontal board may simultaneously act as a bottom closure of the body.

According to a preferred embodiment, the body further comprises an entrance opening for bees, wherein the entrance opening is located on the first side wall or on a second side wall of the body opposing the first side wall.

In these embodiments, the means for receiving the drawer is either located on the same side as the entrance opening for the bees or on an opposite side of the beehive. Providing the means for receiving the drawer on the opposite side will avoid disturbance of the bees entering and leaving the beehive while the beekeeper operates the drawer. This way, also the risk of the beekeeper being stung by the bees when refilling the container is minimized.

If the means for receiving the drawer are provided on the same side as the entrance opening for the bees, on the other hand, a top surface of the front board or another component of the drawer may simultaneously act as an entrance board for the bees.

Moreover, the entrance opening may be located above the means for receiving the drawer.

In this embodiment, the bees entering the beehive experience a raised humidity due to the liquid in the drawer operating. This is advantageous compared to another alternative, in which the entrance opening is located below the means for receiving the drawer, which, still, is a viable arrangement for the beehive according to the present invention.

In a preferred embodiment, the drawer further comprises a sponge.

Here, a sponge is preferred as it can absorb more liquid. Moreover, a sponge is easy to handle and avoids spilling the liquid from the container when inserting the drawer.

Moreover, the sponge may be attached to the container. This prevents the sponge from falling out when the beekeeper operates the drawer.

According to a preferred embodiment, the drawer further comprises a cover which is permeable to vapor.

The cover acts to shield the drawer, the container and the liquid from dirt. Moreover, this embodiment helps to keep the bees from entering the drawer. Still, in this embodiment, the vapor evaporating from the liquid in the container may leave the drawer. In particular, if the drawer has a bottom board, the cover may be substantially parallel to the bottom board.

It is, moreover, preferred that the cover comprises openings.

Openings have an advantage over permeable membranes which might be otherwise used as a cover since the vapor can pass more efficiently through openings in the cover.

In an even more preferred embodiment, the cover is comprised of a board with bores and/or slits, a wire net and/or a mesh.

A board with bores or slits can easily be manufactured. Moreover, also a wire net and a mesh may be easily manufactured. In addition, also standard meshes and/or wire nets may be used.

In a preferred embodiment, the means for receiving the drawer further comprises a vapor permeable barrier being placed inside the body above the aperture.

Here, the barrier serves as a protection of the liquid in the container. Bees and dirt are kept from entering the drawer. Moreover, the barrier may further act as to provide additional mechanical stability to the beehive structure, as it is placed inside the beehive rather than inside the drawer. For this, the barrier may span the entire cross section of the beehive.

In this embodiment, it is further preferred that the barrier comprises a board with bores and/or slits, a wire net, and/or a mesh. These embodiments provide the benefit of the barrier being easy to manufacture.

In a preferred embodiment, the body further comprises one or more frames for bees to build honeycombs into.

When providing frames, the bees usually build the honeycombs into the frames, which can be moved with little trouble as the frames are designed so that the bees do not attach wax honeycomb between the frames. The frames can, in particular, comprise wood or plastic.

It is even more preferred that the frames are moveable. In this embodiment, the beekeeper can easily take the honeycombs out of the bee hive, e.g., to harvest the honey.

Alternatively or additionally, the number of frames is, in particular, between 2 and 20, preferably between 6 and 12, most preferably between 8 and 10.

This results in a size for the bee hive and the frames that facilitates transporting the hive and taking the frames out of the hive.

In an even more preferred embodiment, the frames are arranged above the means for receiving the drawer.

Here, the liquid evaporates and rises upward to the frames. The frames and the bees on the frames thus experience an even higher humidity.

According to a preferred embodiment, the drawer has a front board.

The front board provides a protection for the aperture in the beehive body. When put into place in the body, the front board shields the aperture from dirt entering the beehive. Moreover, the front board may serve to increase the stability of the drawer.

In an even more preferred embodiment, the front board of the drawer is further sized to substantially cover the aperture. Here, the aperture is blocked when the drawer is put in place in the beehive. Hence, no dirt can enter the beehive through the aperture. Moreover, the bees cannot enter through the aperture but are forced to enter through the entrance opening. In addition, vapor is kept from leaving the beehive through the aperture.

In a preferred embodiment, the beehive further comprises a fan.

The fan generates an airflow in the beehive facilitating ventilation. Moreover, the airflow leads to an increased evaporation of the liquid in the container and thus assists to increase the humidity in the beehive.

In this embodiment, it is, moreover, preferred that the fan is located inside the beehive.

This leads to the airflow being mainly restricted to the inside of the beehive without introducing too much dry air from the outside.

In this embodiment, it is even more preferred that the fan is fixed to the first side wall.

In this embodiment, the fan is fixed to the same side wall in which also the aperture for the drawer is present. Hence, also any handling means for the fan may easily be placed at the same side wall. The beekeeper may then operate these devices from one side wall only.

Moreover, this is even more advantageous if as the entrance opening for the bees is located on a second side wall, opposite first side wall. Here, the fan is placed further away from the entrance opening. Hence, the bees entering the beehive experience only little of the airflow generated by the fan.

Alternatively or additionally, it is preferred that the fan is fixed above the means of receiving the drawer.

In this embodiment, the airflow generated by the fan flows over the drawer. Hence, the liquid surface experiences a maximum airflow and the liquid evaporation is enhanced. This helps to increase the humidity in the beehive even more.

It is further preferred that the fan is an electrically driven fan.

This has benefits over manually operated fans as no human operator is needed to drive the fan.

In particular, it is preferred that the electrically driven fan is powered by a battery and/or a solar cell.

Here, no expensive wiring of the beehive to an electric network is needed. Especially in rural areas, batteries and solar cells may provide a more reliable source for electrical power than a wired power supply which would otherwise be used, and which may, although less preferred, also be used with the present invention. Using a solar cell, moreover, avoids changing the batteries too often. In addition, the air is usually hottest and driest during the day when the solar cell produces the most electric energy. Hence, the fan is powered while an increase of humidity is needed the most.

In a preferred embodiment, the drawer further comprises at least one wheel.

The wheel allows the beekeeper to easily move the drawer by rolling movement of the wheel. The wheel may be attached to the drawer and roll over a corresponding surface of the body.

The wheel may further be attached to an underside of the drawer.

With the wheel being attached in this position, the mass forces are diverted to the bottom of the drawer and from there to the wheel. This improves the overall stability of the drawer. Moreover, this wheel position is especially advantageous if the aperture is located above a horizontal board of the hive body. In this embodiment, the mass forces of the drawer can easily be diverted to the horizontal board. The stability may even be more increased by the horizontal board being located at the bottom of the body. In embodiments, in which the drawer has a bottom board, the at least one wheel may be attached to an underside of the bottom board of the drawer.

In an even more preferred embodiment, the drawer comprises at least three wheels, most preferably four wheels.

By using at least three wheels, the mass forces can easily be carried by the wheels alone. Here, the stability of the drawer is improved when being moved. Using four wheels further improves the stability. Three wheels may, in particular, be positioned on the nodes of a triangle and four wheels may, in particular, be positioned on the nodes of a rectangle for an even more increased stability.

Alternatively or additionally, the body may comprise one or more body wheels being attached to the body and running on one or more corresponding surfaces of the drawer, in particular, on an underside of the drawer and, preferably, on an underside of the bottom board of the drawer.

In a preferred embodiment, the drawer substantially spans a horizontal cross section of the body.

Here, the drawer is provided with maximum extension to fit in the body. Hence, also the container may be provided with maximum area, such that the liquid in the container has an increased surface. This facilitates evaporation of the liquid.

Additionally or alternatively, the beehive may comprise sensing means to sense an amount of liquid in the container. Here, the beehive may further comprise a indicator for indicate if the amount is below a given threshold value.

Further advantages, and construction details of the present invention will be explained in the following description of a preferred embodiment in conjunction with the enclosed figures.
- Fig. 1: shows a schematic view of a beehive with the drawer being located inside the beehive.
- Fig. 2: shows the beehive of figure 1 with the drawer being retracted from the beehive.
- Fig. 3: shows a perspective view of the same beehive with the drawer being retracted from the beehive.

A beehive according to the illustrated embodiment has a body 1 with an outer cover 2. The body 1 is in the form of a four-side box. The four-side box is open on top and bottom sides. The outer cover 2 is placed on top of the body 1, closing the body 1. Similarly, a horizontal board 4 is located at the bottom of the body 1, forming a bottom board to close the body 1.

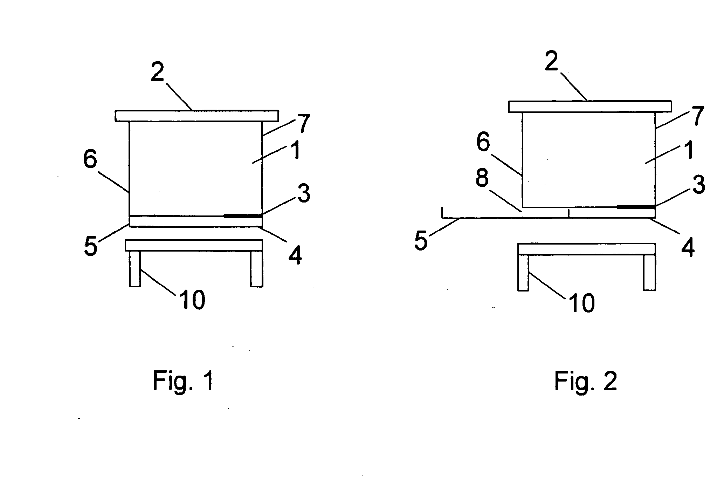

In fig. 1, a drawer 5 is inserted in the body 1 through a first side wall 6. The drawer 5 is located above the horizontal board 4.

The beehive further comprises an entrance opening for bees 3 in a second side wall 7 of the body 1. The second side wall 7 is opposite the first side wall 6. The first and second side walls are, moreover, parallel.

The bee hive of figures 1 and 2 also comprises a hive carrier 10 which serves to carry the body 1. The body 1 is placed on top of the hive carrier 10.

The body 1 further comprises frames for the bees to builds honeycombs into (not shown). The frames are arranged in the body 1, above the drawer 5.

As illustrated in figure 2, the drawer 5 may be retracted from the body 1. For this, the body 1 comprises an aperture 8 in the first side wall 6. The drawer 5 is thus operated from the first side wall 6, away from the entrance opening 3 for the bees in the second side wall.

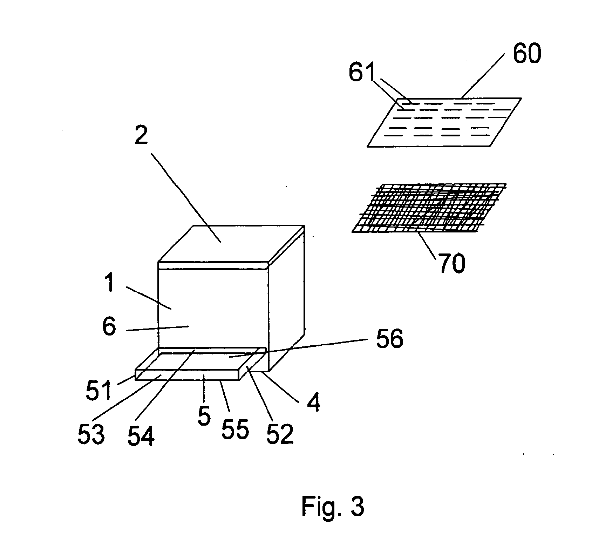

Fig. 3 is a perspective view into the direction of the first side wall 6. In this embodiment, the drawer 5 comprises a bottom board 55, a front board 53, a back board 54 and side walls 51 and 52. The bottom board, the front 53 and back 54 boards and the side walls 51, 52 form a container 56 for a liquid. The drawer 5 is dimensioned as to span the horizontal cross section of the body 1.

Again with reference to figs. 1 and 2, the front board 53 is dimensioned as to fill out the aperture 8. Moreover, the front board 53 is flush with the first side wall 6 when the drawer 5 is inserted into the body 1.

Figure 3 also shows a board 60 with slits 61. Moreover, a wire net 70 is shown. In one embodiment, the board 60 with slits 61 is placed inside the body above the aperture as a barrier. Alternatively or additionally, also the wire net 70 may be placed above the aperture inside the body. The barrier is parallel to the drawer 5 when inserted. Moreover, the barrier is substantially parallel to the outer cover 2. In addition, the barrier is sized as to span a horizontal cross section of the hive body 1. In particular, the barrier is attached to the first and the second side walls.

In other embodiments, the board 60 with slits 61 and/or the wire net 70 may be placed in the drawer substantially parallel to the bottom board and act as a cover.

### Reference Numerals

- 1: Body
- 2: Outer cover
- 3: Entrance opening
- 4: Horizontal board
- 5: Drawer
- 6: First side wall
- 7: Second side wall
- 8: Aperture
- 10: Hive carrier
- 51, 52: Side wall
- 53: Front board
- 54: Back board
- 55: Bottom board
- 56: Container
- 60: Board
- 61: Slit
- 70: Wire net

## Claims

1. A beehive comprising
a body (1)
having means for receiving a drawer (5), the means for receiving the drawer (5) comprising an aperture (8) in a first side wall (6) of the body (1), the beehive further comprising
a drawer (5) being fitted in the body (1) using the means for receiving the drawer (5),
the drawer (5) comprising a container for a liquid.
(following are claims 2 to 20 as originally filed)

2. The beehive of claim 1, wherein the drawer (5) further has a bottom board (55).

3. The beehive according any proceeding claim, wherein the drawer (5) further has a front board (53), a back board (54) opposite the front board (53) and two side walls (51,52).

4. The beehive according to claim 3 when referring to claim 2, wherein the side walls (51, 52), the bottom board (55), the front board (53) and the back board (54) of the drawer (5) define the container for the liquid and are comprised of a water-proof material, wherein the water-proof material comprises, in particular, plastic or waxed wood, and/or wherein the side walls (51, 52), the bottom board (55), the front board (53) and the back board (54) of the drawer (5) are formed integrally.

5. The beehive according to any preceding claim, wherein the drawer (53) further comprises a handle.

6. The beehive according to any preceding claim, wherein the means for receiving the drawer (5) further comprise two side rails inside the body (1) on a left side and on a right side of the aperture (8), respectively, and wherein the drawer (5) further has coupling means on a left side and a right side of the drawer (5), respectively, for sliding engagement with the side rails.

7. The beehive according to any preceding claim, wherein the body (1) further has a horizontal board (4) inside the body (1) and the aperture (8) is located above the horizontal board (4), and wherein, in particular, the horizontal board (4) is attached at a bottom of the body (1).

8. The beehive according to any preceding claim, wherein the body (1) further comprises an entrance opening (3) for bees, wherein the entrance opening (3) is located on the first side wall (6) or on a second side wall (7) of the body (1) opposite the first side wall (6).

9. The beehive according to claim 8, wherein the entrance opening (3) is located above the means for receiving the drawer (5).

10. The beehive according to any preceding claim, wherein the drawer (5) further comprises a sponge, wherein, in particular, the sponge is attached in the container.

11. The beehive according to any preceding claim, wherein the drawer (5) further comprises a cover permeable to vapor of the liquid, the cover, in particular, comprising openings and being preferably comprised of a board (60) with bores and/or slits (61), a wire net (70), and/or a mesh.

12. The beehive according to any preceding claim, wherein the means for receiving the drawer (5) further comprises a vapor permeable barrier being placed inside the body (1) above the means for receiving the drawer, wherein the barrier preferably comprises a board (60) with bores and/or slits (61), a wire net (70), and/or a mesh.

13. The beehive according to any preceding claim, wherein the body (1) further comprises one or more frames for bees to build honeycombs into, wherein the frames are, in particular, moveable and/or the number of frames is, in particular, between 2 and 20, preferably between 6 and 12, and most preferably between 8 and 10.

14. The beehive according to claim 13, wherein the frames are arranged above the means for receiving the drawer.

15. The beehive according to any preceding claim, wherein the drawer (5) has a front board (53), wherein the front board (53) of the drawer (53) is, in particular, sized to substantially cover the aperture (8).

16. The beehive according to any preceding claim, further comprising a fan.

17. The beehive according to claim 16, wherein in the fan is located inside the beehive and, in particular, is fixed to the first side wall (6) and/or above the means for receiving the drawer (5).

18. The beehive according to claim 16 or 17, wherein the fan is an electrically driven fan, which, in particular, is moreover powered by a battery and/or a solar cell, and wherein, preferably, the beehive further comprises a solar cell being connected to the fan and/or the battery.

19. The beehive according to any of the proceeding claims, wherein the drawer (5) further comprises at least one wheel, wherein, in particular, the wheel is attached to an underside of the drawer (5), and wherein the drawer (5) preferably comprises at least three wheels, most preferably four wheels.

20. The beehive according to any of the proceeding claims, wherein the drawer (5) substantially spans a horizontal cross section of the body (1).

## Patentansprüche

1. Bienenstock, der Folgendes umfasst:
einen Körper (1) mit Mitteln zum Aufnehmen einer Schublade (5), wobei die Mittel zum Aufnehmen der Schublade (5) eine Öffnung (8) in einer ersten Seitenwand (6) des Körpers (1) umfassen, wobei der Bienenstock ferner eine Schublade (5) umfasst, die in den Körper (1) eingesetzt ist, wobei die Mittel zum Aufnehmen der Schublade (5) verwendet werden, wobei die Schublade (5) einen Behälter für eine Flüssigkeit umfasst.

2. Bienenstock nach Anspruch 1, bei dem die Schublade (5) ferner eine Bodenwand (55) aufweist.

3. Bienenstock gemäß einem der vorhergehenden Ansprüche, bei dem die Schublade (5) ferner eine Vorderwand (53), eine Rückwand (54) gegenüber der Vorderwand (53) und zwei Seitenwände (51, 52) aufweist.

4. Bienenstock gemäß Anspruch 3 mit Rückbezug auf Anspruch 2, bei dem die Seitenwände (51, 52), die Bodenwand (55), die Vorderwand (53) und die Rückwand (54) der Schublade (5) den Behälter für die Flüssigkeit definieren und ein wasserdichtes Material umfassen, bei dem das wasserdichte Material insbesondere Kunststoff oder gewachstes Holz umfasst und/oder bei dem die Seitenwände (51, 52), die Bodenwand (55), die Vorderwand (53) und die Rückwand (54) der Schublade (5) integral ausgebildet sind.

5. Bienenstock gemäß einem der vorhergehenden Ansprüche, bei dem die Schublade (53) ferner einen Griff umfasst.

6. Bienenstock gemäß einem der vorhergehenden Ansprüche, bei dem die Mittel zum Aufnehmen der Schublade (5) ferner zwei Seitenschienen innerhalb des Körpers (1) auf einer linken Seite bzw. auf einer rechten Seite der Öffnung (8) umfassen, und bei dem die Schublade (5) ferner ein Kopplungsmittel auf einer linken Seite bzw. einer rechten Seite der Schublade (5) für eine gleitende Kopplung mit den Seitenschienen aufweist.

7. Bienenstock gemäß einem der vorhergehenden Ansprüche, bei dem der Körper (1) ferner eine horizontale Wand (4) innerhalb des Körpers (1) aufweist, und bei dem die Öffnung (8) sich oberhalb der horizontalen Wand (4) befindet, und bei dem insbesondere die horizontale Wand (4) an einem Boden des Körpers (1) angebracht ist.

8. Bienenstock gemäß einem der vorhergehenden Ansprüche, bei dem der Körper (1) ferner eine Eintrittsöffnung (3) für Bienen umfasst wobei sich die Eintrittsöffnung (3) auf der ersten Seitenwand (6) oder auf einer zweiten Seitenwand (7) des Körpers (1) gegenüber der ersten Seitenwand (6) befindet.

9. Bienenstock gemäß Anspruch 8, bei dem sich die Eintrittsöffnung (3) oberhalb der Mittel zum Aufnehmen der Schublade (5) befindet.

10. Bienenstock gemäß einem der vorhergehenden Ansprüche, bei dem die Schublade (5) ferner einen Schwamm umfasst, wobei der Schwamm insbesondere in dem Behälter angebracht ist.

11. Bienenstock gemäß einem der vorhergehenden Ansprüche, bei dem die Schublade (5) ferner eine Abdeckung, die für einen Dampf der Flüssigkeit durchlässig ist, umfasst, wobei die Abdeckung insbesondere Öffnungen umfasst und vorzugsweise eine Wand (60) mit Bohrungen und/oder Schlitzen (61), ein Drahtnetz (70) und/oder ein Gewebe umfasst.

12. Bienenstock gemäß einem der vorhergehenden Ansprüche, bei dem die Mittel zum Aufnehmen der Schublade (5) ferner eine dampfdurchlässige Barriere, die innerhalb des Körpers (1) oberhalb der Mittel zum Aufnehmen der Schublade platziert ist, umfassen, wobei die Barriere vorzugsweise eine Wand (60) mit Bohrungen und/oder Schlitzen (61), ein Drahtnetz (70) und/oder ein Gewebe umfasst.

13. Bienenstock gemäß einem der vorhergehenden Ansprüche, bei dem der Körper (1) ferner ein oder mehrere Rähmchen, in welche Bienen Waben bauen können, umfasst, bei dem die Rähmchen insbesondere beweglich sind und/oder die Anzahl von Rähmchen insbesondere zwischen zwei und 20, vorzugsweise zwischen 6 und 12 und am Bevorzugtesten zwischen 8 und 10 beträgt.

14. Bienenstock gemäß Anspruch 13, bei dem die Rähmchen oberhalb der Mittel zum Aufnehmen der Schublade angeordnet sind.

15. Bienenstock gemäß einem der vorhergehenden Ansprüche, bei dem die Schublade (5) eine Vorderwand (53) aufweist, bei dem die Vorderwand (53) der Schublade (53) insbesondere bemessen ist, um die Öffnung (8) im Wesentlichen abzudecken.

16. Bienenstock gemäß einem der vorhergehenden Ansprüche, der ferner einen Lüfter umfasst.

17. Bienenstock gemäß Anspruch 16, bei dem sich der Lüfter innerhalb des Bienenstocks befindet und insbesondere an der ersten Seitenwand (6) und/oder oberhalb der Mittel zum Aufnehmen der Schublade (5) befestigt ist.

18. Bienenstock gemäß Anspruch 16 oder 17, bei dem der Lüfter ein elektrisch betriebener Lüfter ist, der insbesondere darüber hinaus von einer Batterie und/oder einer Solarzelle mit Leistung versorgt wird, und bei dem der Bienenstock vorzugsweise ferner eine Solarzelle, die mit dem Lüfter und/oder der Batterie verbunden ist, umfasst.

19. Bienenstock gemäß einem der vorhergehenden Ansprüche, bei dem die Schublade (5) ferner zumindest ein Rad umfasst, bei dem das Rad insbesondere an einer Unterseite der Schublade (5) angebracht ist, und bei dem die Schublade (5) vorzugsweise zumindest drei Räder, am Bevorzugtesten vier Räder umfasst.

20. Bienenstock gemäß einem der vorhergehenden Ansprüche, bei dem die Schublade (5) einen horizontalen Querschnitt des Körpers (1) im Wesentlichen überbrückt.

## Revendications

1. Ruche comprenant :
un corps (1) comportant des moyens pour recevoir un tiroir (5), les moyens pour recevoir le tiroir (5) comprenant une ouverture (8) dans une première paroi latérale (6) du corps (1), la ruche comprenant en outre :
un tiroir (5) inséré dans le corps (1) en utilisant les moyens pour recevoir le tiroir (5), le tiroir (5) comprenant un contenant pour un liquide.

2. Ruche selon la revendication 1, dans laquelle le tiroir (5) comporte en outre un panneau de fond (55).

3. Ruche selon l'une quelconque des revendications précédentes, dans laquelle le tiroir (5) comporte en outre un panneau avant (53), un panneau arrière (54) opposé au panneau avant (53) et deux parois latérales (51, 52).

4. Ruche selon la revendication 3 lorsqu'elle fait référence à la revendication 2, dans laquelle les parois latérales (51, 52), le panneau de fond (55), le panneau avant (53) et le panneau arrière (54) du tiroir (5) définissent le contenant pour le liquide et sont composés d'un matériau étanche à l'eau, dans laquelle le matériau étanche à l'eau comprend, en particulier, une matière plastique ou un bois ciré, et/ou dans laquelle les parois latérales (51, 52), le panneau de fond (55), le panneau avant (53) et le panneau arrière (54) du tiroir (5) sont formés d'un seul tenant.

5. Ruche selon l'une quelconque des revendications précédentes, dans laquelle le tiroir (53) comprend en outre une poignée.

6. Ruche selon l'une quelconque des revendications précédentes, dans laquelle les moyens pour recevoir le tiroir (5) comprennent en outre deux rails latéraux à l'intérieur du corps (1) d'un côté gauche et d'un côté droit de l'ouverture (8), respectivement, et dans laquelle le tiroir (5) comporte en outre des moyens d'accouplement d'un côté gauche et d'un côté droit du tiroir (5), respectivement, pour une mise en prise de manière coulissante avec les rails latéraux.

7. Ruche selon l'une quelconque des revendications précédentes, dans laquelle le corps (1) comporte en outre un panneau horizontal (4) à l'intérieur du corps (1) et l'ouverture (8) est située au-dessus du panneau horizontal (4), et dans laquelle, en particulier, le panneau horizontal (4) est fixé au niveau d'un fond du corps (1).

8. Ruche selon l'une quelconque des revendications précédentes, dans laquelle le corps (1) comprend en outre une ouverture d'entrée (3) pour les abeilles, dans laquelle l'ouverture d'entrée (3) est située sur la première paroi latérale (6) ou sur une deuxième paroi latérale (7) du corps (1) opposée à la première paroi latérale (6).

9. Ruche selon la revendication 8, dans laquelle l'ouverture d'entrée (3) est située au-dessus des moyens pour recevoir le tiroir (5).

10. Ruche selon l'une quelconque des revendications précédentes, dans laquelle le tiroir (5) comprend en outre une éponge, dans laquelle, en particulier, l'éponge est fixée dans le contenant.

11. Ruche selon l'une quelconque des revendications précédentes, dans laquelle le tiroir (5) comprend en outre un élément de recouvrement perméable à la vapeur du liquide, l'élément de recouvrement, en particulier, comprenant des ouvertures et étant de préférence composé d'un panneau (60) avec des alésages et/ou des fentes (61), un treillis métallique (70), et/ou un maillage.

12. Ruche selon l'une quelconque des revendications précédentes, dans laquelle les moyens pour recevoir le tiroir (5) comprennent en outre une barrière perméable à la vapeur qui est placée à l'intérieur du corps (1) au-dessus des moyens pour recevoir le tiroir, dans laquelle la barrière comprend de préférence un panneau (60) avec des alésages et/ou des fentes (61), un treillis métallique (70), et/ou un maillage.

13. Ruche selon l'une quelconque des revendications précédentes, dans laquelle le corps (1) comprend en outre une ou plusieurs cadres pour que les abeilles construisent des nids d'abeille à l'intérieur de ceux-ci, dans laquelle les cadres sont, en particulier, mobiles et/ou le nombre de cadres est, en particulier, entre 2 et 20, de préférence entre 6 et 12, et plus préférablement entre 8 et 10.

14. Ruche selon la revendication 13, dans laquelle les cadres sont agencés au-dessus des moyens pour recevoir le tiroir.

15. Ruche selon l'une quelconque des revendications précédentes, dans laquelle le tiroir (5) comporte un panneau avant (53), dans laquelle le panneau avant (53) du tiroir (53) est, en particulier, dimensionné pour couvrir sensiblement l'ouverture (8).

16. Ruche selon l'une quelconque des revendications précédentes, comprenant en outre un ventilateur.

17. Ruche selon la revendication 16, dans laquelle le ventilateur est situé à l'intérieur de la ruche et, en particulier, est fixé à la première paroi latérale (6) et/ou au-dessus des moyens pour recevoir le tiroir (5).

18. Ruche selon la revendication 16 ou 17, dans laquelle le ventilateur est un ventilateur alimenté électriquement, qui, en particulier, est de plus alimenté par une batterie et/ou une cellule solaire, et dans laquelle, de préférence, la ruche comprend en outre une cellule solaire connectée au ventilateur et/ou à la batterie.

19. Ruche selon l'une quelconque des revendications précédentes, dans laquelle le tiroir (5) comprend en outre au moins une roue, dans laquelle, en particulier, la roue est fixée à un dessous du tiroir (5), et dans laquelle le tiroir (5) comprend de préférence au moins trois roues, plus préférablement quatre roues.

20. Ruche selon l'une quelconque des revendications précédentes, dans laquelle le tiroir (5) s'étend sensiblement sur une section transversale horizontale du corps (1).
